# EUROPÄISCHE PATENTSCHRIFT

(11) **EP 0 569 568 B1**
(45) Veröffentlichungstag und Bekanntmachung des Hinweises auf die Patenterteilung: **28.02.1996**
(21) Anmeldenummer: 92923412.8
(22) Anmeldetag: 25.11.1992
(51) Int. Cl.: C08J 11/06, C12H 1/04, B01J 20/34

(54) **VERFAHREN ZUM REGENERIEREN VON PVPP UND VERWENDUNG EINES OXIDATIONSMITTELS**
METHOD OF REGENERATING PVPP, AND THE USE OF AN OXIDIZING AGENT FOR THE REGENERATION
PROCEDE DE REGENERATION DE POLYVINYLPYRROLIDONE (PVPP) ET UTILISATION D'UN OXYDANT

(30) Priorität: 03.12.1991 CH 3545/91
(43) Veröffentlichungstag der Anmeldung: 18.11.1993
(73) Patentinhaber: Filtrox-Werk AG, CH-9001 St. Gallen (CH)
(72) Erfinder: MEYER, Karl-Otto, CH-9220 Bischofszell (CH); KIEFER, Johannes, CH-9032 Engelburg (CH)
(74) Vertreter: Hepp, Dieter
(86) Internationale Anmeldenummer: CH9200231
(87) Internationale Veröffentlichungsnummer: WO9311186

(56) Entgegenhaltungen:
- US-A- 3 878 310
- US-A- 4 740 308

## Beschreibung

Die Erfindung betrifft ein Verfahren zum Regenerieren von Polyvinylpolypyrrolidon (PVPP), das mit polyphenolhaltigen Substanzen beladen ist.

Polyvinylpolypyrrolidon (PVPP) wird vor allem als Stabilisierungsmittel bei der Herstellung von Getränken, insbesondere von Bier eingesetzt. Dabei wird die Eigenschaft des PVPP, phenolische Bestandteile zu binden bzw. anzulagern, genutzt. Dieser Prozess dient der Erhöhung der Haltbarkeit des Getränkes bzw. des Bieres.

Um einen möglichst rationellen Einsatz des sehr teuren PVPP's zu gewährleisten, wird das mit Phenolen beladene PVPP einem Regenerierprozess zugeführt, der folgendermassen abläuft:

Zunächst wird der während der Stabilisierung in einem Filter zurückgehaltene PVPP-Kuchen mit warmem oder kaltem Wasser gespült. Dies dient der Beseitigung noch vorhandener Bierreste. Nach diesem Spülprozess wird in einer Kreislaufschaltung unter Einpumpen von Natronlauge bis zu einer Endkonzentration von 1 - 2 % das PVPP regeneriert. Der Regenerationsprozess läuft bei ca. 40°C - 80°C ab.

Nachdem die phenolischen Substanzen vom PVPP abgelöst wurden, wird die Natronlauge, die erheblich verschmutzt ist, mit frischem Wasser verdrängt. Nach Wiederherstellen der Kreislaufschaltung erfolgt eine Zudosage von Säure, z.B. Salpetersäure, Phosphorsäure oder Citronensäure. Die Zudosage von Säure dient der Neutralisation der PVPP-Dispersion. Mit diesem leicht angesäuerten Wasser erfolgt eine Heisswassersterilisation der Anlage.

Nach Ende des Sterilisationsprozesses steht die Stabilisieranlage für einen weiteren Einsatz zur Verfügung. Die anfallende Ablauge unterliegt den jeweiligen gesetzlichen Vorschriften der Entsorgung. In sehr geringem Mass kann ein Einsatz für andere Zwecke in einem Getränkeindustrie-Betrieb erfolgen.

Aufgrund der Einleitungsbestimmungen von Abwasser muss diese Ablauge in der Regel einem Neutralisationsschritt unterworfen werden. Dabei werden unterschiedliche Mengen von Mineralsalzen erzeugt, je nach der Art der zur Neutralisation verwendeten Säure.

Folgende Mengenbilanz kann für einen Brauereibetrieb mit einer Jahresproduktion von 1'000'000 hl bei der Verwendung dieses Verfahrens angenommen werden:
- Zu stabilisierende Jahresmenge: 1'000'000 hl.
- Eine typische Dosagemenge sind ca. 30 g PVPP/hl Bier. Dies ergibt eine Gesamteinsatzmenge von ca. 30'000 kg/Jahr.
- Eine dieser Jahresproduktion angemessene PVPP-Stabilisierungsanlage hat ein Fassungsvermögen von etwa 275 kg PVPP.

Es kann aufgrund der in der Regel vorhandenen Kopplung mit einer vorgeschalteten Filtration nur mit einer durchschnittlichen Ausnutzung von 80 % bis zu einer erforderlichen Regeneration gerechnet werden. Dies ergibt pro Jahr etwa 120 Regenerationen. Der typische Systeminhalt einer solchen Anlage liegt bei etwa 70 hl. Damit fallen pro Jahr etwa 8'400 hl 2%-iger Lauge an. Dies ergibt eine Gesamtmenge von ca. 17 t Natriumhydroxid pro Jahr. Die normalerweise nötige Neutralisation erhöht die Salzfracht je nach verwendeter Säure. So wird bei Neutralisation mit Salzsäure eine Salzfracht (NaCl) von ca. 25 t/Jahr anfallen. Diese nicht unerheblichen Mengen belasten Vorfluter und Kläranlagen.

Dieses oben beschriebene gewässerbelastende Verfahren kann erfindungsgemäss wesentlich optimiert werden. Ersetzt man die verwendete Natronlauge durch ein oder mehrere Oxidationsmittel, wie zum Beispiel Wasserstoffperoxid, so kann der beschriebene Prozess ohne den Anfall stark alkalischer Abwasser durchgeführt werden. Der dabei erzielte Regenerationseffekt entspricht mindestens dem der Regeneration mit Natronlauge.

Der zusätzliche Einsatz einer geringen Menge an Lauge, z.B. weniger als 0,5 %, vorzugsweise 0,2 - 0,1 % begünstigt den Regenerationseffekt zusätzlich, ohne wesentlich abwasserbelastend zu wirken.

Biere enthalten z.B. bis zu 200 verschiedene Polyphenole, die durch Wasserstoffbindung am PVPP angelagert werden. Bei der konventionellen Regenerierung wird diese Wasserstoffbindung durch Absenken des pH-Wertes bei erhöhter Temperatur aufgebrochen. Zur Oxidation lassen sich selbstverständlich auch Mischungen von Oxidationsmitteln einsetzen. Z.B. ist es auch denkbar, Ozon alleine oder in Verbindung mit Wasserstoffperoxid zur Oxidation einzusetzen. Sowohl Ozon als auch Wasserstoffperoxid haben den grossen Vorteil, dass sie bei diesem Verfahren entweder zu Wasser oder zu Sauerstoffatomen umgewandelt werden, so dass keinerlei Umweltbelastung eintritt. Demnach lassen sich erfindungsgemäss auf vorteilhaft einfache Weise die bei der Oxidation entstandenen Verbindungen vom PVPP trennen, insbesondere auswaschen.

Vorzugsweise kann der Oxidationsprozess in einer wässrigen Suspension oder durch entsprechende Behandlung des Filterkuchens durchgeführt werden. Besonders einfach lässt sich das erfindungsgemässe Verfahren verwirklichen, wenn das mit Polyphenolen beladene PVPP in einem geschlossenen Kreislauf gefördert und dabei dem Oxidationsprozess zur Trennung der Polyphenole ausgesetzt wird.

Besonders gute Ergebnisse bei kurzer Behandlungszeit lassen sich erzielen, wenn das PVPP mit Wasserstoffperoxid in einer Konzentration von 1 % bis 5 %, vorzugsweise von etwa 2 % bis 3 % für einen Zeitraum von 15 min und höchstens 60 min behandelt wird.

Es hat sich bewährt, wenn die Oxidation bei erhöhten Temperaturen stattfindet. Besonders geeignet sind Verfahrenstemperaturen zwischen 50 °C und 95 °C, vorzugsweise bei etwa 75 bis 85 °C.

Es hat sich gezeigt, dass durch Einleiten von Ozon, z.B. mittels eines Flächenbegasers, der das Ozon feinperlig in der Suspension verteilt, ebenfalls eine Regenerierung möglich ist. Der Einsatz eines Rührwerks sowie erhöhte Verfahrenstemperaturen im oben genannten Bereich sind dabei ebenfalls vorteilhaft.

Gute Ergebnisse werden auch erzielt, wenn die Suspension gleichzeitig sowohl mit Wasserstoffperoxid versetzt als auch mit Ozon durchmischt wird.

Das erfindungsgemässe Verfahren lässt sich in einer Abwandlung auch so durchführen, dass während der Oxidation der pH-Wert des behandelten Stoffs bzw. der behandelten Suspension (verglichen mit dem pH-Wert vor der Behandlung) abgesenkt wird. Dazu eignet sich z.B. eine Lauge mit einer Minimalkonzentration von weniger als 0,5 %, vorzugsweise weniger als 0,2 %.

Wesentlich für die Erfindung ist ebenfalls, dass sich durch Oxidation mit den verschiedensten Oxidationsmitteln auf einfache und schnelle Weise Polyphenole von PVPP trennen lassen, ohne dass dabei gefährliche oder umweltbelastende Stoffe wie Säuren oder Laugen mit höherer Konzentration eingesetzt werden müssen. Dem Fachmann sind noch weitere geeignete Oxidationsmittel wie z.B. Peroxyessigsäure oder Natriumperoxysulfat bekannt. Soweit derartige Oxidationsmittel die Wasserstoffbindung der phenolhaltigen Substanzen zum PVPP lösen, sind sie zum erfindungsgemässen Einsatz geeignet. In der Praxis wird sich der Fachmann allerdings auf ungiftige und das Abwasser nicht belastende Stoffe beschränken, soweit nicht besondere verfahrensmässige Vorteile oder sonstige Gründe dagegen sprechen.

Die Erfindung ist im folgenden anhand von Beispielen im Labormassstab näher erläutert. Die Beispiele sind nach den vorhandenen Erfahrungen der Fachwelt mit der Laugenregeneration auf den Praxismassstab übertragbar, vor allem was die Effektivität der Regeneration betrifft.

### Beispiel 1

a) Benutztes und bereits mit Lauge regeneriertes PVPP aus einem Brauereibetrieb wurde zur Stabilisierung von Bier verwendet. Die Phenolhaltigkeit des Biers vor und nach der Stabilisierung wurde bestimmt. Derartige Analyseverfahren sind allgemein bekannt und gebräuchlich. Bei Bier ergibt sich dabei meist ein Wert zwischen 70 mg und 90 mg pro Liter. Durch Vergleich des Polyphenolwerts vor der Stabilisierung mit dem Polyphenolwert nach der Stabilisierung lässt sich der an das PVPP gebundene Polyphenolanteil bestimmen. Dieser Anteil bzw. diese Menge der aus dem Bier entfernten Polyphenole wurden als Wert 100 % angenommen.
b) Das mit Polyphenolen beladene PVPP wurde anschliessend mit folgenden Bedingungen regeneriert:
   Temperatur: 80 °C
   Wasserstoffperoxid-Konzentration in der wässrigen Suspension: 2,0 %
   Zeit: 30 Minuten.
   Das so erhaltene Regenerat wurde wiederum zur Bierstabilisierung verwendet, wobei analog Beispiel 1a vor und nach der Stabilisierung die Polyphenolhaltigkeit des Biers und damit die Aufnahme durch das PVPP ermittelt wurde.

### Beispiel 2

Das verwendete PVPP wurde mit Ausnahme der Regeneratonsbedingungen behandelt wie in Beispiel 1b. Regeneriert wurde unter folgenden Bedingungen:
Temperatur: 80 °C
Wasserstoffperoxid-Konzentration: 2,0 %
Natronlauge-Konzentration: 0,1 %
Zeit: 30 Minuten.
Auch das so erhaltene Regenerat wurde wieder zur Bierstabilisierung und zur Bestimmung des Polyphenolhaltigkeit eingesetzt.

### Beispiel 3

Als Gegenprobe wurde hier die Regenerierung nur mit Natronlauge durchgeführt.
Temperatur: 80 °C
Natronlauge-Konzentration: 2,0 %
Zeit: 30 Minuten.
In Tabelle 1 sind die mit diesen vier Verfahren erzielten Regeneriereffekte zusammengestellt.

**Tabelle 1:**

| Regeneriereffekt bei unterschiedlichen Regenerierverfahren | | |
|---|---|---|
| Verfahren gemäss | Polyphenolaufnahme | Vergleichswert Ausgangsmaterial |
| Beispiel 1a (unbehandelt) | 143 mg | 100 % |
| Beispiel 1b | 149 mg | 104 % |
| Beispiel 2 | 161 mg | 113 % |
| Beispiel 3 | 153 mg | 107 % |
| unbehandelt + beladen | 46 mg | 32 % |

Als Vergleichswert dient das unbehandelte sowie das unbehandelte und beladene PVPP (beim letzten Beispiel der Tabelle "unbehandelt + beladen" wurde ein nicht regeneriertes PVPP während 30 Minuten bei einer Temperatur von 80 °C zur Bierstabilisierung eingesetzt. Da die Aufnahmekapazität des nicht regenerierten PVPP erschöpft war, wurde ein Vergleichswert von nur 32 % Polyphenolaufnahme ermittelt).

Aus den Werten der Tabelle wird ersichtlich, dass die Kapazität des Stabilisierungsmittels bei der erfindungsgemässen Regenerierung wieder vollständig hergestellt wird.

Diese Werte können, wie das Beispiel der Regenerierung mit Natronlauge zeigt, auch auf die Verhältnisse der Praxis übertragen werden. Ein ähnlicher Regeneriereffekt kann auch mit anderen Oxidationsmitteln erreicht werden, z.B. mit Peroxyessigsäure und/oder durch Einleiten von Ozon in die wässrige PVPP-Suspension. Gute Regenerier-Ergebnisse haben sich auch erzielen lassen, wenn zwei oder mehrere Oxidationsmittel eingesetzt werden. So kann z.B. vor allem bei der Behandlung einer im Kreislauf umgepumpten wässrigen PVPP-Suspension durch Beigabe von Wasserstoffperoxid und gleichzeitiges Einleiten von Ozon ein hervorragender Stabilisiereffekt mit relativ kurzen Behandlungszeiten erzielt werden.

Das erfindungsgemässe Verfahren wurde auch zur Regenerierung von PVPP eingesetzt, das auf andere Weise mit polyphenolhaltigen Substanzen belastet wurde, so z.B. zur Stabilisierung von Frucht- oder Obstsäften. Dabei wurden gleich gute Ergebnisse erzielt wie bei der Behandlung von PVPP, das für die Bierstabilisierung eingesetzt wurde.

## Patentansprüche

1. Verfahren zum Regenerieren von PVPP, das mit polyphenolhaltigen Substanzen beladen ist, insbesondere zum Regenerieren von PVPP nach dessen Verwendung als Stabilisierungsmittel für Getränke, dadurch gekennzeichnet, dass die Regeneration durch Oxidieren erfolgt.

2. Verfahren nach Anspruch 1, dadurch gekennzeichnet, dass die bei der Oxidation entstehenden Verbindungen vom PVPP getrennt, insbesondere dass sie ausgewaschen werden.

3. Verfahren nach Anspruch 1 oder 2, dadurch gekennzeichnet, dass das PVPP als Filterkuchen oder in wässriger Suspension dem Oxidationsprozess zur Trennung der Polyphenole ausgesetzt wird.

4. Verfahren nach einem der vorangegangenen Ansprüche, dadurch gekennzeichnet, dass das mit Polyphenolen beladene PVPP in einem geschlossenen Kreislauf gefördert und dabei dem Oxidationsprozess zur Trennung der Polyphenole ausgesetzt wird.

5. Verfahren nach einem der vorangegangenen Ansprüche, dadurch gekennzeichnet, dass das mit Polyphenolen behandelte PVPP in einer wässrigen Suspension oxidiert wird, die Wasserstoffperoxid enthält.

6. Verfahren nach Anspruch 5, dadurch gekennzeichnet, dass das mit den Polyphenolen beladene PVPP mit Wasserstoffperoxid in einer Konzentration von 1 % bis 5 %, vorzugsweise von etwa 2 % bis 3 % für einen Zeitraum von wenigstens 10 Minuten und höchstens 60 Minuten behandelt wird.

7. Verfahren nach einem der vorangegangenen Ansprüche, dadurch gekennzeichnet, dass die an das PVPP gebundenen Polyphenole bei einer Temperatur von wenigstens 40 °C und höchstens 95 °C, vorzugsweise bei etwa 75 °C bis 85 °C, oxidiert werden.

8. Verfahren nach einem der vorangegangenen Ansprüche 3 bis 7, dadurch gekennzeichnet, dass zur Oxidation Ozon in die Suspension bzw. den Filterkuchen eingeleitet wird.

9. Verfahren nach einem der vorangegangenen Ansprüche 1 bis 8, dadurch gekennzeichnet, dass während der Oxidation der pH-Wert des zu behandelnden Stoffes bzw. der behandelten Suspension abgesenkt wird, vorzugsweise dass Lauge in einer Konzentration von weniger als 0,5 %, vorzugsweise von weniger als 0,2 % zugeführt wird.

10. Verwendung wenigstens eines Oxidationsmittels zum Regenerieren von mit Polyphenolen beladenem PVPP.

11. Verwendung von Wasserstoffperoxid nach Anspruch 10.

12. Verwendung von Ozon nach Anspruch 10 oder 11.

## Claims

1. Process for regenerating PVPP which is charged with polyphenol-containing substances, in particular for regenerating PVPP after it has been used as a stabilising agent for drinks, characterised in that regeneration is carried out by oxidation.

2. Process according to claim 1, characterised in that the compounds arising from oxidation are separated, in particular are washed out.

3. Process according to claim 1 or 2, characterised in that PVPP is subjected in the form of filter cake or in aqueous suspension to the oxidising process for separating the polyphenols.

4. Process according to one of the preceding claims, characterised in that the PVPP charged with polyphenols is circulated in a closed system and is thus subjected to the oxidation process for separating the polyphenols.

5. Process according to one of the preceding claims, characterised in that the PVPP treated with polyphenols is oxidised in an aqueous suspension containing hydrogen peroxide.

6. Process according to claim 5, characterised in that the PVPP charged with polyphenols is treated with hydrogen peroxide in a concentration of 1 % to 5 %, preferably from approximately 2 % to 3 % for a period of at least 10 minutes and at most 60 minutes.

7. Process according to one of the preceding claims, characterised in that the polyphenols bound to the PVPP are oxidised at a temperature of at least 40°c and at most 95°C, preferably at approximately 75°C to 85°C.

8. Process according to one of the preceding claims 3 to 7, characterised in that for the purpose of oxidation, ozone is introduced to the suspension or filter cake.

9. Process according to one of the preceding claims 1 to 8, characterised in that during oxidation the pH-value of the substance to be treated or the suspension treated is reduced, preferably lye is added in a concentration of less than 0.5 %, preferably less than 0.2 %.

10. Use of at least one oxidising agent for regenerating PVPP charged with polyphenols.

11. Use of hydrogen peroxide according to claim 10.

12. Use of ozone according to claim 10 or 11.

## Revendications

1. Procédé pour la régénération de la polyvinylpolypyrrolidone (PVPP), qui est chargée en substances contenant des polyphénols, en particulier pour la régénération de la PVPP après son utilisation en tant qu'agent stabilisant pour boissons, caractérisé par le fait que la régénération a lieu par oxydation.

2. Procédé selon la revendication 1, caractérisé par le fait que les composés se formant lors de l'oxydation sont séparés de la PVPP, en particulier par le fait qu'ils sont enlevés par lavage.

3. Procédé selon la revendication 1 ou 2, caractérisé par le fait que la PVPP est exposée au processus d'oxydation en vue de la séparation des polyphénols en tant que gâteau de filtration ou en suspension aqueuse.

4. Procédé selon l'une des revendications précédentes, caractérisé par le fait que la PVPP chargée en polyphénols est véhiculée dans un circuit fermé, tout en étant exposée au processus d'oxydation en vue de la séparation des polyphénols.

5. Procédé selon l'une des revendications précédentes, caractérisé par le fait que la PVPP chargée en polyphénols est oxydée dans une suspension aqueuse qui contient du peroxyde d'hydrogène.

6. Procédé selon la revendication 5, caractérisé par le fait que la PVPP chargée en les polyphénols est traitée par du peroxyde d'hydrogène dans une concentration de 1% à 5%, de préférence d'environ 2% à 3% pendant un laps de temps d'au moins 10 minutes et d'au plus 60 minutes.

7. Procédé selon l'une des revendications précédentes, caractérisé par le fait que les polyphénols liés à la PVPP sont oxydés à une température d'au moins 40°C et d'au plus 95°C, de préférence à une température d'environ 75°C à 85°C.

8. Procédé selon l'une des revendications précédentes 3 à 7, caractérisé par le fait que, pour l'oxydation, de l'ozone est introduit dans la suspension ou dans le gâteau de filtration.

9. Procédé selon l'une des revendications précédentes 1 à 8, caractérisé par le fait que, pendant l'oxydation, la valeur du pH de la substance à traiter ou de la suspension traitée est abaissée, de préférence que de la lessive alcaline est introduite dans une concentration de moins de 0,5%, de préférence de moins de 0,2%.

10. Utilisation d'au moins un agent d'oxydation pour la régénération de la PVPP chargée en polyphénols.

11. Utilisation de peroxyde d'hydrogène selon la revendication 10.

12. Utilisation d'ozone selon la revendication 10 ou 11.
